# EUROPÄISCHE PATENTSCHRIFT

(11) **EP 1 731 477 B1**
(45) Veröffentlichungstag und Bekanntmachung des Hinweises auf die Patenterteilung: **10.09.2014**
(21) Anmeldenummer: 06011621.7
(22) Anmeldetag: 06.06.2006
(51) Int. Cl.: B66F 9/075, B66F 9/06, B65G 1/06, B62D 51/02, B62B 3/06

(54) **Kommissionierflotte**
Order picker fleet
Flotte de chariots commissioneurs

(30) Priorität: 10.06.2005 DE 102005026913
(43) Veröffentlichungstag der Anmeldung: 13.12.2006
(73) Patentinhaber: OM Carrelli Elevatori S.p.A., 20020 Lainate (MI) (IT)
(72) Erfinder: Hoock, Michael, 22299 Hamburg (DE)
(74) Vertreter: Geirhos, Johann

(56) Entgegenhaltungen:
- EP-A- 1 028 086
- DE-A1- 19 541 677
- DE-A1- 19 749 679
- DE-A1- 19 817 565
- DE-A1- 19 908 201
- DE-U1- 20 020 741
- DE-U1- 29 607 272
- US-A- 3 756 350

## Beschreibung

Die Erfindung betrifft eine Kommissionierflotte, umfassend zumindest einen Horizontalkommissionierer, der ein Antriebsteil, ein Lastteil sowie einen eine Standplattform und ein Bedienpult umfassenden Bedienstand für eine Bedienperson aufweist, dessen Standplattform zwischen dem Antriebsteil und dem Lastteil angeordnet ist, wobei das Lastteil mittels einer Hubvorrichtung am Antriebsteil anhebbar angeordnet ist und das Lastteil mit an Lastarmen angeordneten Lastrollen versehen ist, und zumindest einen Vertikalkommissionierer, der ein Antriebsteil, ein Lastteil sowie einen eine Standplattform und ein Bedienpult umfassenden Bedienstand für eine Bedienperson aufweist, dessen Standplattform zwischen dem Antriebsteil und dem Lastteil angeordnet ist" wobei das Lastteil am Bedienstand angeordnet und der Bedienstand mittels einer Hubeinrichtung am Antriebsteil anhebbar angeordnet ist, und wobei das Antriebsteil mit an Längsträgern angeordneten Lastrollen versehen ist.

Als Horizontalkommissionierer und Vertikalkommissionierer ausgebildete Kommissionierer finden sich im Produktprogramm aller großen Hersteller von Flurförderzeugen. Die verschiedenen als Vertikal- und Horizontalkommissionierer ausgebildeten Kommissionierer eines Herstellers sind in dieser Patentanmeldung unter dem Begriff Kommissionierflotte zusammengefasst.

Horizontalkommissionierer weisen einen anhebbaren Lastteil auf, mit dem eine Last zum Transport um ca. 10-20 cm angehoben werden kann, wobei diese Horizontalkommissionierer ebenfalls als Niederhubkommissionierer bezeichnet werden. Horizontalkommissionierer werden hierbei zum Kommissionieren von Waren auf erster Regalebene in Lagern eingesetzt, wobei der Bedienstand fest oder anhebbar ausgebildet werden kann, um für die Bedienperson weiterhin eine Kommissionierung von Waren aus zweiter Regalebene im Lager zu ermöglichen. Horizontalkommissionierer weisen hierbei in der Regel eine Bauweise auf, bei der das Lastteil, der Bedienstand und ein Batterieblock relativ zu einem Antriebsteil, das mit einer Fahrantriebseinheit und einem Hubantrieb versehen ist, mittels einer als Initialhubeinrichtung ausgebildeten Hubvorrichtung anhebbar sind.

Ein derartiger Horizontalkommissionierer ist aus der Figur 1 der DE 195 41 677 A1 bekannt. Die EP 1 028 086 A2 offenbart eine alternative Ausführung eines Horizontalkommissionierers.

Vertikalkommissionerer, bei denen das Lastteil an dem anhebbaren Bedienstand angeordnet sind, weisen in einer Ausführungsform mit niedrigstem Hub des Bedienstandes bereits eine Kommissionierhöhe von mindestens 3,5 m auf und ermöglichen somit eine Entnahme von Waren aus der dritten Regalebene eines Lagers und werden je nach Hubhöhe als Mittelhub- oder Hochhubkommissionierer bezeichnet. Vertikalkommissionierer weisen hierbei eine Bauweise auf, bei der der Bedienstand zusammen mit dem Lastteil mittels einer als Hubgerüst ausgebildete Hubeinrichtung relativ zum Antriebsteil, das mit dem Fahrantrieb, dem Hubantrieb und dem Batterieblock versehen ist, anhebbar ist.

Derartige Vertikalkommissionierer sind aus der US 3 756 350, der DE 296 07 272 U1 oder der DE 197 49 679 A1 bekannt.

Aufgrund dieser unterschiedlichen Bauweise von Horizontalkommissionierern und Vertikalkommissionierern ist es bislang üblich, für Horizontalkommisionierer und Vertikalkommissionierer vollständig unterschiedliche Antriebsteil herzustellen. Im Hinblick auf die Fertigung der verschiedenen Kommissionierer der Kommissionierflotte bedeutet dies jedoch eine hohe Teilevielfalt mit einem hohen Herstellaufwand für die verschiedenen Kommissionierer der Kommissionierflotte.

Der vorliegenden Erfindung liegt die Aufgabe zugrunde, eine aus Horizontalkommissionierern und Vertikalkommissionieren bestehende Kommissionierflotte zur Verfügung zu stellen, die mit geringem Herstellaufwand herstellbar ist.

Diese Aufgabe wird erfindungsgemäß dadurch gelöst, dass mindestens ein Horizontalkommissionierer der Kommissionierflotte und mindestens ein Vertikalkommissionierer der Kommissionierflotte ein Antriebsteil aufweisen, das einen Rahmen aufweist, an dem in Hauptfahrtrichtung vorn ein Antrieb, insbesondere eine Fahrantriebseinheit und/oder ein Hubantrieb, befestigbar ist, an dem in Hauptfahrtrichtung hinter dem Antrieb ein Batteriefach zur Aufnahme eines Batterieblocks ausgebildet ist, wobei an dem Rahmen in Hauptfahrtrichtung unmittelbar hinter dem Batteriefach in Hauptfahrtrichtung angrenzend an das Batteriefach der Bedienstand befestigt ist. Mit einem derartigen Rahmen, bei dem in Hauptfahrtrichtung vorn der eine Fahrantriebseinheit und einen Hubantrieb umfassende Antrieb, anschließend an den Antrieb ein Batteriefach und anschließend an das Batteriefach der Bedienstand angeordnet ist, wobei der Bedienstand in Hauptfahrtrichtung hinter dem Batteriefach und vor der Bedienperson befestigt ist, kann ein Antriebsteil für einen Vertikalkommissionierer und ein Antriebsteil für einen Horizontalkommissionierer mit hohem Gleichteileanteil hergestellt werden. Es ist somit mit geringen zusätzlichen Bauaufwand möglich, aus dem Antriebsteil eines Horizontalkommissionierers ein Antriebsteil eines Vertikalkommissionierers abzuleiten und herzustellen, wobei für das Antriebsteil des Horizontalkommissionierers und das Antriebsteil des Vertikalkommissionierer nahezu identische Rahmen verwendet werden können. Hierdurch ergibt sich aufgrund einer verringerten Teilevielfalt für die Antriebsteile der aus Horizontalkommissionierern und Vertikalkommissionierern bestehende Kommissionierflotte ein geringer Herstellaufwand für die Kommissionierflotte.

Mit besonderem Vorteil ist an dem Rahmen des Antriebsteils benachbart zu der Standplattform des Bedienstands in Hauptfahrtrichtung im hinteren Bereich der Standplattform das Lastteil des Horizontalkommissionierers oder die Lastrollen des Vertikalkommissionierers befestigt. Mit einer derartigen Bauweise des Antriebsteils kann auf einfache Weise für einen Horizontalkommissionierer hinter dem Bedienstand das Lastteil angeordnet werden und für einen Vertikalkommissionierer, bei dem an dem anhebbaren Bedienstand das Lastteil angeordnet ist, hinter dem anhebbaren Bedienstand die Lastrollen an dem Antriebsteil befestigt werden und somit mit einem nahezu identischen Rahmen Antriebsteile für Horizontalkommissionierer und für Vertikalkommissionierer der Kommissionierflotte hergestellt werden. '

Besondere Vorteile ergeben sich, wenn der Rahmen des Antriebsteils zwei seitliche Längsträger aufweist, die sich entlang des Bedienstands erstrecken, wobei an den Längsträgern der Bedienstand und/oder das Lastteil befestigt ist. An den Längsträgern des Rahmens des Antriebsteils können auf einfache Weise und mit geringem Bauaufwand der Bedienstand und das Lastteil eines Horizontalkommissionierers sowie der mit dem Lastteil versehenen anhebbare Bedienstand eines Vertikalkommissionierers befestigt werden.

Zweckmäßigerweise ist hierbei die Fahrantriebseinheit am Rahmen des Fahrantriebs mittig und starr befestigt. Durch eine auf der Fahrzeugmittellinie gelegene und somit mittige Anordnung einer als lenkbaren Fahrmotor ausgebildeten Fahrantriebseinheit kann mit geringem Bauaufwand ein Antriebsteil mit gleicher Anordnung einer identischen Fahrantriebseinheit zur Herstellung eines Horizontalkommissionierers und eines Vertikalkommissionierers verwendet werden.

Besondere Vorteile ergeben sich, wenn das Antriebsteil mit Aufnahmen für seitliche Stützrollen versehen ist. Hierdurch ist es auf einfache Weise möglich, an dem Antriebsteil zur Erhöhung der Fahrstabilität und der Standsicherheit eines Horizontalkommissionierers oder eines Vertikalkommissionionierers gefederte Stützrollen anzuordnen.

Sofern für den im Antriebsteil angeordneten Hubantrieb zumindest zwei Hubantriebe mit unterschiedlichen Leistungen vorgesehen sind, kann auf einfache Weise in dem Antriebsteil eines Horizontalkommissionierers, der ein Lastteil mit geringe Hubhöhe und/oder einen festen Bedienstand aufweist, ein Hubantrieb mit geringer Leistung eingebaut und in dem Antriebsteil eines Vertikalkommissionierers, der ein Lastteil mit größerer Hubhöhe und/oder einen anhebbaren Bedienstand aufweist, ein Hubantrieb mit entsprechend höherer Leistung eingebaut werden und somit der Hubantrieb des Antriebsteils an die verschiedenen Ausführungsformen der Kommissionierer der Kommissionierflotte angepasst werden.

Besondere Vorteile ergeben sich, wenn der Bedienstand mit einer Bedieneinrichtung versehen ist, insbesondere einem Bedienelemente aufweisenden Lenker. Mit einer an dem Bedienstand angeordneten Bedieneinrichtung können Horizontalkommissionierer und Vertikalkommissionierer der Kommissionierflotte auf einfache Weise von einer Bedienperson gesteuert werden.

Die Bedieneinrichtung ist hierbei in vorteilhafter Weise an dem Bedienpult angeordnet, das sich in Hauptfahrtrichtung nach vorn erstreckt. Mit einem derartigen, sich nach vorn über das Batteriefach erstreckenden Bedienpult wird für die Bedieneinrichtung kein zusätzlicher Bauraum in Längsrichtung des Horizontalkommissionierers und Vertikalkommissionierers benötigt.

Der Bedienstand des Horizontalkommissionierers kann hierbei als fester oder anhebbarer Bedienstand ausgebildet sein. An dem Antriebsteil können in Hauptfahrtrichtung hinter dem Batteriefach auf einfache Weise verschiedene Bedienstände eines Horizontalkommissionierers befestigt werden, wodurch auf einfache Weise mit einem Antriebsteil unterschiedliche Ausführungsformen von Horizontalkommissionierern mit mehreren Varianten von Bedienständen hergestellt werden können.

Für den anhebbaren Bedienstand des Horizontalkommissionierers ist hierbei vorteilhafterweise am Rahmen des Antriebsteils, insbesondere den Längsträgern, ein Hubgerüst befestigt.

Eine einfache Befestigung des festen Bedienstandes bzw. des anhebbaren Bedienstandes am Antriebsteil ist hierbei erzielbar, wenn am Rahmen des Antriebsteils, insbesondere den Längsträgern, seitliche vertikale Träger befestigt sind, an denen der feste Bedienstand angeordnet ist oder die den feststehenden Abschnitt des Hubgerüsts des anhebbaren Bedienstandes des Horizontalkommissionierers bilden.

Mit besonderem Vorteil ist die Hubvorrichtung zum Anheben des Lastteils des Horizontalkommissionierers am Rahmen des Antriebsteils, insbesondere den Längsträgern, in Hauptfahrtrichtung hinter dem Bedienstand befestigt. Die Hubvorrichtung des Lastteils des Horizontalkommissionierers ist somit in Hauptfahrtrichtung hinter dem Bedienstand angeordnet. Das Hubgerüst eines anhebbaren Bedienstandes ist in Hauptfahrtrichtung vor dem Bedienstand angeordnet. Hierdurch ist auf einfache Weise erzielbar, dass an dem Antriebsteil verschiedene Varianten von Bedienständen und verschiedene Varianten von Lastteilen mit unterschiedlichen Hubeinrichtungen angeordnet werden können, wodurch mit geringem Herstellaufwand unterschiedliche Ausführungsformen von Horizontalkommissionierern mit einem Antriebsteil hergestellt werden können.

Die Hubvorrichtung des Horizontalkommissionierers weist hierbei zweckmäßigerweise seitliche vertikale Profile auf, die am Rahmen des Antriebsteils, insbesondere den Längsträgern, befestigt sind, wodurch das anhebbare Lastteil mit geringem Bauaufwand am Antriebsteil angeordnet werden kann.

Bevorzugt ist die Hubvorrichtung des Horizontalkommissionierers als Initialhubeinrichtung und/oder als Hubmast ausgebildet ist. Somit können Horizontalkommissionierer mit einem lnitialhub, der eine Hubhöhe von ca. 15-20 cm zum Transport einer Last ermöglicht, und Horizontalkommissionierer mit einem an einem Hubmast angeordneten Lastaufnahmemittel hergestellt werden, die eine vergrößerte Hubhöhe aufweisen, wodurch auf einfache Weise mit einem Antriebsteil unterschiedliche Horizontalkommissionierer mit mehreren Varianten von Lastteilen hergestellt werden können. Der Hubmast kann hierbei als Alternative zu einer Initialhubeinrichtung oder zusätzlich zur der Initialhubeinrichtung zur Erzielung eines Zusatzhubes vorgesehen werden.

An der Hubvorrichtung des Horizontalkommissionierers, insbesondere den seitlichen vertikalen Profilen, ist hierbei mit besonderem Vorteil eine Rückwand des Bedienstands angeordnet.

Die Hubeinrichtung zum Anheben des Bedienstands des Vertikalkommissionierers ist gemäß einer Ausführungsform der Erfindung als Hubgerüst ausgebildet, das am Rahmen des Antriebsteils, insbesondere den Längstragern, befestigt ist. Durch diese Ausgestaltung und Anordnung des Bedienstandes des Vertikalkommissionierers, an dem das Lastteil befestigt ist, kann auf einfache Weise der anhebbare Bedienstand in Hauptfahrtrichtung hinter dem Batteriefach und vor der Bedienperson am Rahmen des Antriebsteils angeordnet werden, wodurch mit dem Antriebsteil bei geringem Bauaufwand ein Vertikalkommissionierer hergestellt werden kann.

Das Hubgerüst des Bedienstandes des Vertikalkommissionierers ist auf einfache Weise an dem Antriebsteil befestigt, wenn das Hubgerüst seitliche vertikale Profile aufweist, die an dem Rahmen des Antriebsteils, insbesondere den Längsträgern, befestigbar sind.

Bei dem Vertikalkommissionierer sind die Längsträger des Rahmens des Antriebsteils mit den Lastrollen versehen, wodurch auf einfache Weise bei einem Vertikalkommissionierer die Lastrollen an dem Antriebsteil in Hauptfahrtrichtung hinter der Bedienperson angeordnet werden können.

Unterschiedliche Varianten von Vertikalkommissionierern können auf einfache Weise hergestellt werden, wenn das Lastteil des Vertikalkommissionierers einen festen oder anhebbaren Lastteil umfasst, der an dem anhebbaren Bedienteil angeordnet ist, wobei durch einen anhebbaren Lastteil ein Zusatzhub erzielbar ist.

Das Lastteil des Vertikalkommissionierers ist hierbei zweckmäßigerweise mittels eines Hubmastes anhebbar, wobei der Hubmast an einer Standplattform des Bedienstands befestigt ist.

Weitere Vorteile und Einzelheiten der Erfindung werden anhand der in den schematischen Figuren dargestellten Ausführungsbeispiele näher erläutert. Hierbei zeigt
- Figuren 1a, 1b: eine erste Ausführungsform eines Horizontalkommissionierers,
- Figur 2: eine zweite Ausführungsform eines Horizontalkommissionierers,
- Figur 3: eine dritte Ausführungsform eines Horizontalkommissionierers,
- Figur 4: eine vierte Ausführungsform eines Horizontalkommissionierers,
- Figuren 5a, 5b: eine erste Ausführungsform eines Vertikalkommissionierers und
- Figuren 6a, 6b: eine zweite Ausführungsform eines Vertikalkommissionierers.

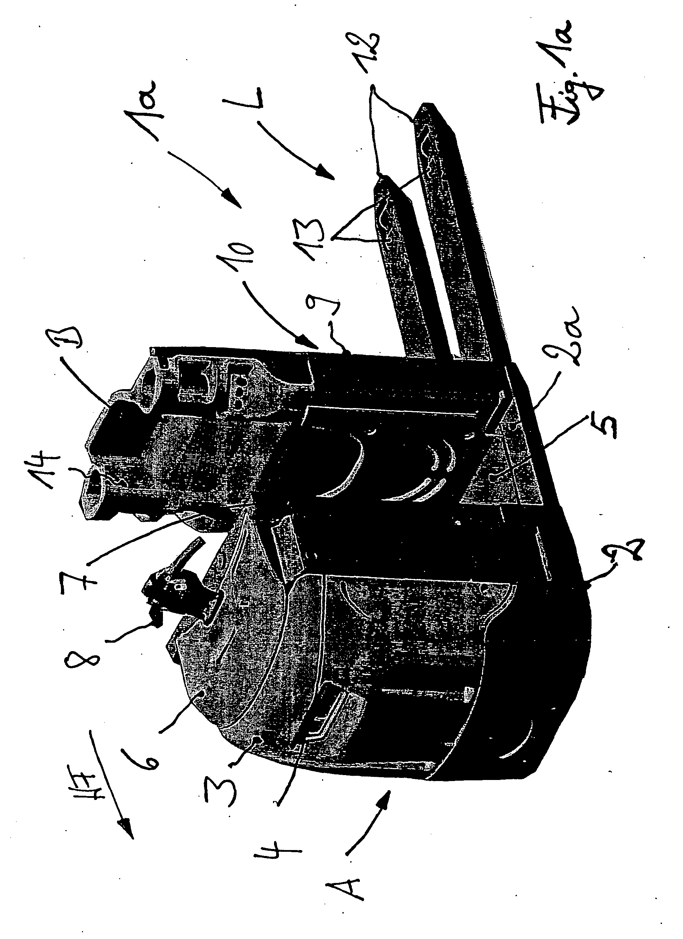

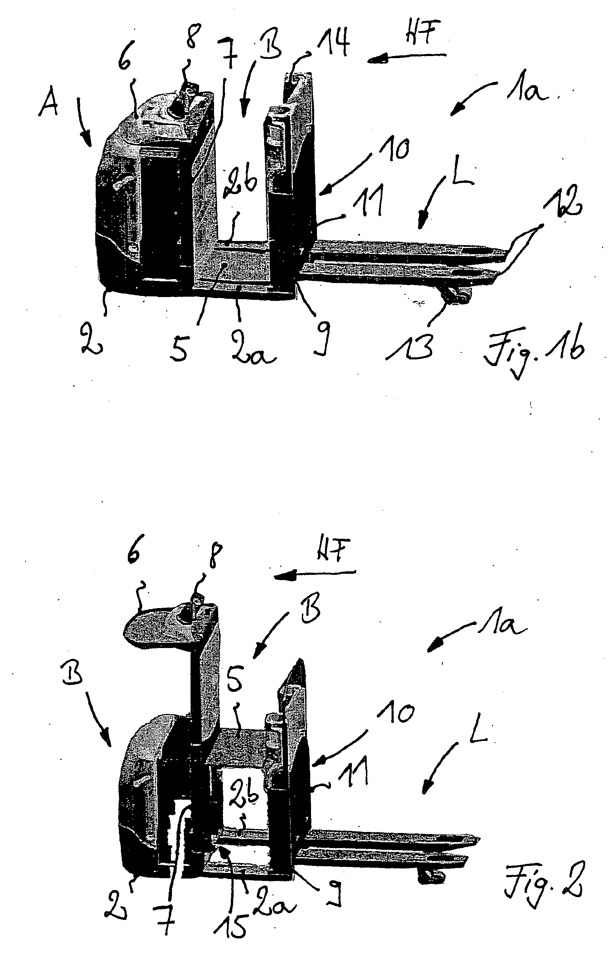

Die Figuren 1a, 1b zeigen eine erste Ausführungsform eines erfindungsgemäßen Horizontalkommissionierers 1 a einer Kommissionierflotte. Der Horizontalkommissionierer 1 a weist in Hauptfahrtrichtung HF ein vorn angeordnetes Antriebsteil A und einen am hinteren Bereich angeordneten, anhebbaren Lastteil L auf, wobei zwischen Antriebsteil A und Lastteil L ein Bedienstand B für eine Bedienperson angeordnet ist.

Das Antriebsteil A weist als tragendes Bauteil einen Rahmen 2 auf, der zwei seitliche Längsträger 2a, 2b umfasst, die sich in Fahrzeugslängsrichtung entlang des Bedienteils B erstrecken.

Unter einer Haube 3 des Antriebsteils A ist in Hauptfahrtrichtung HF vorn am Rahmen 2 auf nicht mehr dargestellte Weise ein Antrieb angeordnet, der eine mittig und starr angeordnete elektrische Fahrantriebseinheit, die einen Fahrmotor und einen Lenkmotor zum Drehen des Fahrmotors umfasst, und weitere nicht mehr dargestellte Aggregate aufweist, beispielsweise eine Leistungselektronikeinheit und ein elektrischer Hubantrieb. Der Rahmen 2 des Antriebsteils A ist weiterhin mit nicht mehr dargestellten Aufnahmen für seitliche, gefederte Stützrollen versehen.

An dem Rahmen 2 des Antriebsteils A ist weiterhin ein Batteriefach 4 zur Aufnahme eines Batterieblocks ausgebildet, das in Hauptfahrtrichtung HF benachbart und hinter dem unter der Haube 2 angeordneten Antrieb angeordnet ist.

In Hauptfahrtrichtung HF hinter dem Batteriefach 4 ist am Rahmen 2 bzw. den Längsträgern 2a, 2b des Antriebsteils A des Horizontalkommissionierers 1a der Bedienstand B angeordnet. Der Bedienstand B ist hierbei als fester Bedienstand ausgebildet und weist eine Standplattform 5 sowie ein Bedienpult 6 auf, wobei der Bedienstand B in Hauptfahrtrichtung HF vor der auf der Standplattform 5 stehenden Bedienperson am Rahmen 2 bzw. den Längsträgern 2a, 2b befestigt ist. Der Bedienstand B ist hierbei an seitlichen vertikalen Trägem 7 angeordnet, die am Rahmen 2 bzw. den Längsträgern 2a, 2b in Hauptfahrtrichtung HF hinter dem Batteriefach 4 und vor der auf der Standplattform 5 befindlichen Bedienperson angeordnet und befestigt sind. Das Bedienpult 6 erstreckt sich hierbei in Hauptfahrtrichtung HF nach vorn über das Batteriefach 4 und ist mit einer Bedieneinrichtung 8 versehen, die beispielsweise als Bedienelemente aufweisenden Lenker ausgebildet ist.

Zum Anheben des Lastteils L des Horizontalkommissionierers 1a ist eine Hubvorrichtung 10 vorgesehen, die seitliche vertikale Profile 9 aufweist, die in Hauptfahrtrichtung HF hinter dem Bedienstand B am hinteren Endbereich des Rahmens 2 bzw. der Längsträger 2a, 2b angeordnet und befestigt sind. Die Hubvorrichtung 10 ist als Initialhubeinrichtung ausgebildet, mittels der ein Hubschlitten 11, an dem Lastarme 12 angeordnet sind, in denen Lastrollen 13 schwenkbar gelagert sind, in den vertikalen Profilen 9 anhebbar bzw. absenkbar.

An dem Lastteil L, insbesondere den feststehenden vertikalen Profilen 9, ist hierbei eine Rückwand 14 des Bedienstands B angeordnet.

Der Horizontalkommissionierer 1a gemäß den Figuren 1a, und 1b, der einen festen Bedienstand B und ein mittels einer als Initialhubeinrichtung ausgebildeten Hubvorrichtung 10 anhebbares Lastteil L aufweist, ist hierbei in der Figur 1a mit abgesenktem Lastteil L und in der Figur 1b mit angehobenem Lastteil L dargestellt.

In der Figur 2 ist eine zweite Ausführungsform des Horizontalkommissionierer 1a mit einem anhebbaren Bedienteil B und ein Lastteil L dargestellt, das mittels einer als Initialhubeinrichtung ausgebildeten Hubeinrichtung 10 anhebbar ist. Die am Antriebsteil A in Hauptfahrtrichtung HF hinter dem Batteriefach 4 und vor der auf der Standplattform 5 stehenden Bedienperson angeordneten und befestigten seitlichen vertikalen Träger 7 bilden hierbei den feststehenden Abschnitt eines Hubgerüst 15, mit dem der von der Standplattform 5 und dem Bedienpult 6, die mit der Bedieneinrichtung 8 versehen ist, gebildete Bedienstand B anhebbar bzw. absenkbar ist. Durch die Anordnung der Bedieneinrichtung 8 an dem Bedienpult 6 des anhebbaren Bedienstandes B ist - wie aus der Figur 2 ersichtlich ist - bei angehobenem Bedienstand B auf einfache Weise ein Betrieb des Horizontalkommissionierers 1 möglich. _

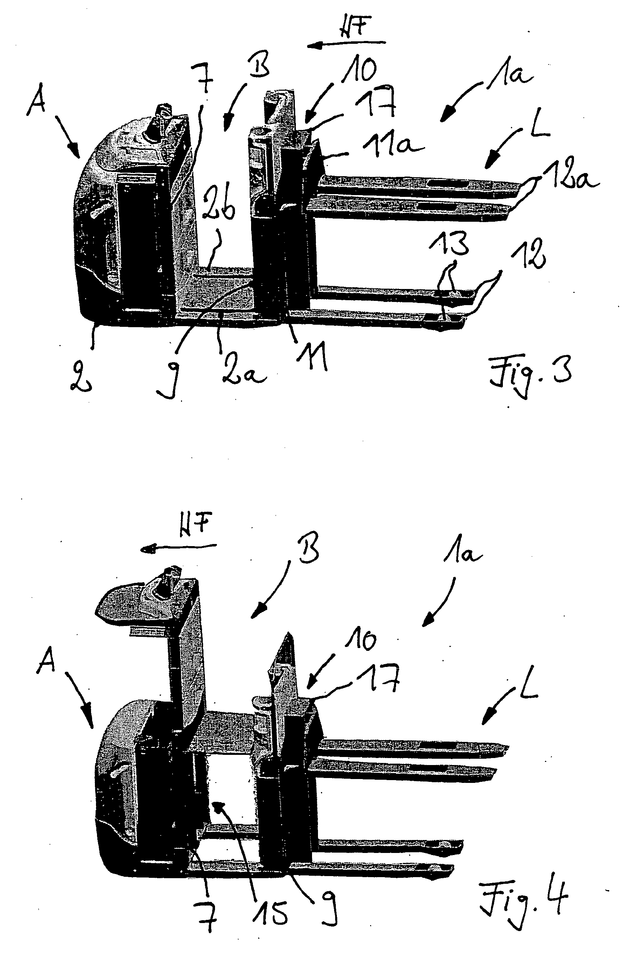

In der Figur 3 ist eine dritte Ausführungsform des Horizontalkommissionierers 1a mit einem festen Bedienstand B und einem Lastteil L gezeigt, wobei die Hubvorrichtung 10 in Weiterbildung der Figuren 1a, 1b weiterhin einen Hubmast 17 aufweist, der an dem Hubschlitten 11 der Initialhubeinrichtung angeordnet ist und somit einen Zusatzhub bildet. In dem Hubmast 17 ist ein mit Hubarmen 12a versehener Lastschlitten 11a anhebbar angeordnet, wobei die Lastrollen 13 an den mittels der Initialhubeinrichtung anhebbaren Lastarmen 12 angeordnet sind. Der Bedienstand B ist entsprechend den Figuren 1a, 1b an den seitlichen vertikalen Träger 7 angeordnet, die am Rahmen 2 bzw. den Längsträgern 2a, 2b des Antriebsteils A befestigt sind. In der Figur 3 ist der Horizontalkommissionierer 1 a bei abgesenkter Initialhubeinrichtung und angehobenem Hubmast 17 des Lastteils L dargestellt.

Die Figur 4 zeigt eine vierte Ausführungsform eines Horizontalkommissionierers 1a mit einem gemäß der Figur 3 ausgebildeten Lastteil L, das zusätzlich zur Initialhubeinrichtung eine als Hubmast 17 ausgebildete Hubeinrichtung 10 aufweist, und mit einem anhebbaren Bedienstand B gemäß der Figur 2, der mittels eines die seitlichen vertikalen Träger 7 umfassenden Hubgerüst 15 anhebbar bzw. absenkbar ist. In der Figur 4 ist der Horizontalkommissionierer 1a mit angehobenem Bedienstand B und angehobenem Hubmast 17 des Lastteils L dargestellt, wobei sich die Initialhubeinrichtung des Lastteils L in der abgesenkten Stellung befindet.

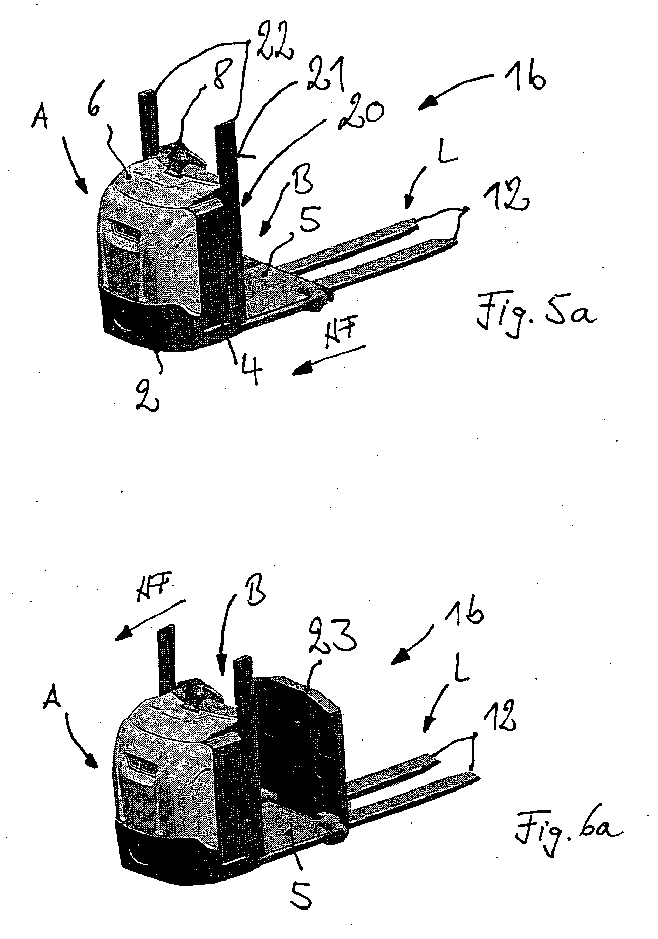

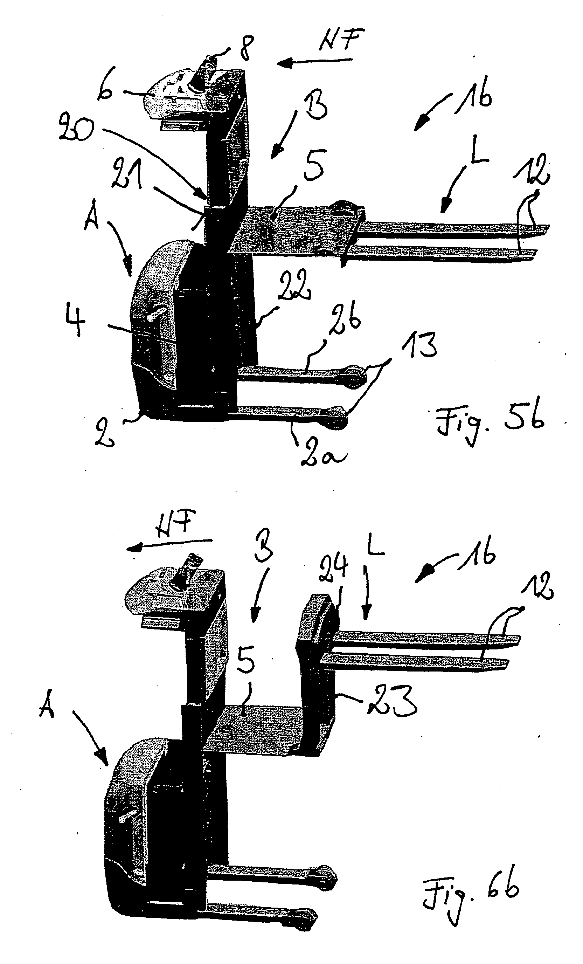

In den Figuren 5a, 5b ist eine erste Ausführungsform eines erfindungsgemäßen Vertikalkommissionierer 1b der Kommissionierflotte gezeigt. Der Vertikalkommissionerer 1 b ist aus dem Antriebsteil A gemäß den Figuren 1 bis 4 abgeleitet und weist einen anhebbaren Bedienstand B auf, an dem das Lastteil L befestigt ist. Der Bedienstand B ist hierbei an dem Rahmen 2 des Antriebsteils A in Hauptfahrtrichtung HF hinter dem Batteriefach 4 und vor der auf der Standplattform 5 befindlichen Bedienperson befestigt.

Der anhebbare, von der Standplattform 5 und dem mit den Bedienelementen 8 versehenen Bedienpult 6 gebildete Bedienstand B ist mittels einer als Hubgerüst 21 mit seitlichen vertikalen Profilen 22 ausgebildete Hubeinrichtung 20 anhebbar bzw. absenkbar, wobei die Profile 22, die den feststehenden Abschnitt des Hubgerüstes 21 bilden, am Rahmen 2 bzw. den Längsträgern 2a, 2b des Antriebsteils A in Hauptfahrtrichtung HF hinter dem Batteriefach 4 und vor der auf der Standplattform 5 befindlichen Bedienperson angeordnet und befestigt sind. Das Lastteil L ist als festes Lastteil L ausgebildet und weist Lastarme 12 auf, die an der Standplattform 5 des Bedienstandes B befestigt sind. Die Lastrollen 13 sind hierbei an den Längsträgern 2a, 2b des Antriebsteil A in Hauptfahrtrichtung HF hinter der auf der Standplattform 5 stehenden Bedienperson angeordnet. Die Figur 5a zeigt den Vertikalkommissionierer 1 b mit abgesenktem Bedienstand B und somit abgesenktem Lastteil L. In der Figur 5b ist der Bedienstand B mit dem Lastteil L in der angehobenen Stellung gezeigt.

In den Figuren 6a, 6b ist eine zweite Ausführungsform eines Vertikalkommissionierers 1 b gezeigt, bei dem ein anhebbares Lastteil L vorgesehen ist. Der Lastteil L ist mittels eines an der Standplattform 5 des Bedienteils B angeordneten Hubmastes 23 anhebbar, der einen mit den Lastarmen 12 versehener Lastschlitten 24 aufweist. Die Figur 6a zeigt den Vertikalkommissionierer 1b mit abgesenktem Bedienstand B und abgesenktem Hubmast 23. In der Figur 6b ist der Vertikalkommissionierer 1 b mit angehobenem Bedienstand B und angehobenem Hubmast 23 gezeigt.

Die in den Figuren 1a bis 4 dargestellten Ausführungsformen der Horizontalkommissionierer 1 a und die in den Figuren 5a bis 6b dargestellten Ausführungsformen der Vertikalkommissionierer 1 b sind alle Bestandteile einer Kommissionierflotte, die in einem Herstellungsbetrieb für Kommissionierern unter Verwendung eines im wesentlichen identischen Antriebsteils A herstellbar sind, an dessen Rahmen 2 in Hauptfahrtrichtung HF vorn ein Antrieb, insbesondere eine mittige und starr angeordnete Fahrantriebseinheit und/oder ein Hubantrieb, befestigt ist, an dem in Hauptfahrtrichtung HF hinter dem Antrieb das Batteriefach 4 zur Aufnahme eines Batterieblocks ausgebildet ist und an dem in Hauptfahrtrichtung HF hinter dem Batteriefach 4 und vor der auf der Standplattform 5 stehenden Bedienperson der Bedienstand B befestigt ist. An dem Rahmen 2 dieses Antriebsteil A kann durch Befestigung eines Lastteils L hinter dem Bedienstand B ein Horizontalkommissionierer 1 a gebildet werden, wobei der Bedienstand B fest oder anhebbar ausgestaltet werden kann. Durch die Anordnung von Lastrollen 13 an dem Rahmen 2 des Antriebsteils A hinter dem Bedienstand B und Verwendung eines Bedienstandes B mit daran angeordnetem Lastteil L kann mit dem Antriebsteil A ein Vertikalkommissionierer 1b hergestellt werden. Hierdurch wird trotz großer Typenvielfalt innerhalb der Kommissionierflotte die Variantenvielfalt des Antriebsteils A gering gehalten.

## Patentansprüche

1. Kommissionierflotte, umfassend zumindest einen Horizontalkommissionierer (1a), der ein Antriebsteil (A), ein Lastteil (L) sowie einen eine Standplattform (5) und ein Bedienpult (6) umfassenden Bedienstand (B) für eine Bedienperson aufweist, dessen Standplattform (5) zwischen dem Antriebsteil (A) und dem Lastteil (L) angeordnet ist, wobei das Lastteil (L) mittels einer Hubvorrichtung (10) am Antriebsteil (A) anhebbar angeordnet ist und das Lastteils (L) mit an Lastarmen (12) angeordneten Lastrollen (13) versehen ist, und zumindest einen Vertikalkommissionierer (1b), der ein Antriebsteil (A), ein Lastteil (L) sowie einen eine Standplattform (5) und ein Bedienpult (6) umfassenden Bedienstand (B) für eine Bedienperson aufweist, dessen Standplattform (6) zwischen dem Antriebsteil (A) und dem Lastteil (L) angeordnet ist" wobei das Lastteil (L) am Bedienstand (B) angeordnet und der Bedienstand (B) mittels einer Hubeinrichtung (20) am Antriebsteil (A) anhebbar angeordnet ist, und wobei das Antriebsteil (A) mit an Längsträgern (2a, 2b) angeordneten Lastrollen (13) versehen ist, **dadurch gekennzeichnet, dass** mindestens ein Horizontalkommissionierer (1a) der Kommissionierflotte und mindestens ein Vertikalkommissionierer (1 b) der Kommissionierflotte ein Antriebsteil (A) aufweisen, das einen Rahmen (2) aufweist, an dem in Hauptfahrtrichtung (HF) vorn ein Antrieb, insbesondere eine Fahrantriebseinheit und/oder ein Hubantrieb, befestigt ist, an dem in Hauptfahrtrichtung (HF) hinter dem Antrieb ein Batteriefach (4) zur Aufnahme eines Batterieblocks ausgebildet ist, wobei an dem Rahmen (2) in Hauptfahrtrichtung (HF) unmittelbar hinter dem Batteriefach (4) und in Hauptfahrtrichtung (HF) angrenzend an das Batteriefach (4) der Bedienstand (B) befestigt ist.

2. Kommissionierflotte nach Anspruch 1, **dadurch gekennzeichnet, dass** an dem . Rahmen (2) des Antriebsteils (A) benachbart zu der Standplattform (5) des Bedienstands (B) in Hauptfahrtrichtung (HF) im hinteren Bereich der Standplattform (5) das Lastteil (L) des Horizontalkommissionierers (1a) oder die Lastrollen (13) des Vertikalkommissionierers (1b) befestigt ist.

3. Kommissioniertlotte nach Anspruch 1 oder 2, **dadurch gekennzeichnet, dass** der Rahmen (2) des Antriebsteils (A) zwei seitliche Längsträger (2a, 2b) aufweist, die sich entlang des Bedienstands (B) erstrecken, wobei an den Längsträgern (2a, 2b) der Bedienstand (B) und/oder das Lastteil (L) befestigt ist.

4. Kommissionierflotte nach einem der Ansprüche 1 bis 3, **dadurch gekennzeichnet, dass** die Fahrantriebseinheit am Rahmen (2) des Antriebsteils (A) starr und mittig befestigt ist.

5. Kommissionierflotte nach einem der Ansprüche 1 bis 4, **dadurch gekennzeichnet, dass** das Antriebsteil (A) mit Aufnahmen für seitliche Stützrollen versehen ist.

6. Kommissionierflotte nach einem der Ansprüche 1 bis 5, **dadurch gekennzeichnet, dass** für den im Antriebsteil (A) angeordneten Hubantrieb zumindest zwei Hubantriebe mit unterschiedlichen Leistungen vorgesehen sind.

7. Kommissionierflotte nach einem der Ansprüche 1 bis 6, **dadurch gekennzeichnet, dass** der Bedienstand (B) mit einer Bedieneinrichtung (8) versehen ist, insbesondere einem Bedienelemente aufweisenden Lenker.

8. Kommissionierflotte nach einem der Ansprüche 1 bis 7, **dadurch gekennzeichnet, dass** die Bedieneinrichtung (8) an dem Bedienpult (6) angeordnet ist, das sich in Hauptfahrtrichtung (HF) nach vorn erstreckt.

9. Kommissionierflotte nach einem der Ansprüche 1 bis 8, **dadurch gekennzeichnet, dass** der Bedienstand (B) des Horizontalkommissionierers (1a) als fester oder anhebbarer Bedienstand (B) ausgebildet ist.

10. Kommissionierflotte nach Anspruch 9, **dadurch gekennzeichnet, dass** der anhebbare Bedienstand (B) des Horizontalkommissionierers (1a) ein Hubgerüst (15) aufweist, das am Rahmen (2) des Antriebsteils (A), insbesondere den Längsträgern (2a, 2b), befestigt ist.

11. Kommissionierflotte nach Anspruch 9 oder 10, **dadurch gekennzeichnet, dass** am Rahmen (2) des Antriebsteils (A), insbesondere den Längsträgern (2a, 2b), seitliche vertikale Träger (7) befestigt sind, an denen der feste Bedienstand (B) des Horizontalkommissionierers (1a) angeordnet ist oder die den feststehenden Abschnitt des Hubgerüsts (15) des anhebbaren Bedienstandes (B) des Horizontalkommissionierers (1a) bilden.

12. Kommissionierflotte nach einem der Ansprüche 1 bis 11, **dadurch gekennzeichnet, dass** die Hubvorrichtung (10) zum Anheben des Lastteils (L) des Horizontalkommissionierers (1a) am Rahmen (2) des Antriebsteils (A), insbesondere den Längsträgern (2a, 2b), in Hauptfahrtrichtung (HF) hinter dem Bedienstand (B) befestigt ist.

13. Kommissionierflotte nach Anspruch 12, **dadurch gekennzeichnet, dass** die Hubvorrichtung (10) zum Anheben des Lastteils (L) des Horizontalkommissionierers (1a) seitliche vertikale Profile (9) aufweist, die am Rahmen (2) des Antriebsteil (A), insbesondere den Längsträgern (2a, 2b), befestigt sind.

14. Kommissionierflotte nach Anspruch 12 oder 13, **dadurch gekennzeichnet, dass** die Hubvorrichtung (10) des Horizontalkommissionierers (1a) als Initialhubeinrichtung und/oder als Hubmast (17) ausgebildet ist.

15. Kommissionierflotte nach einem der Ansprüche 12 bis 14, **dadurch gekennzeichnet, dass** an der Hubvorrichtung (10), insbesondere den seitlichen vertikalen Profilen (9), des Horizontalkommissionierers (1a) eine Rückwand (14) des Bedienstands (B) angeordnet ist.

16. Kommissionierflotte nach einem der Ansprüche 1 bis 8, **dadurch gekennzeichnet, dass** die Hubeinrichtung (20) zum Anheben des Bedienstands (B) des Vertikalkommissionierers (1 b) als Hubgerüst (21) ausgebildet ist, das am Rahmen (2) des Antriebsteils (A), insbesondere den Längsträgern (2a, 2b), befestigt ist.

17. Kommissionierflotte nach Anspruch 16, **dadurch gekennzeichnet, dass** das Hubgerüst (21) des Bedienstandes (B) des Vertikalkommissionierers (1b) seitliche vertikale Profile (22) aufweist, die am Rahmen (2) des Antriebsteils (A), insbesondere den Längsträgern (2a, 2b), befestigt sind.

18. Kommissionierflotte nach Anspruch 16 oder 17, **dadurch gekennzeichnet, dass** das Lastteil (L) des Vertikalkommissionierers (1 b) einen festen oder anhebbaren Lastteil (L) umfasst, der an dem anhebbaren Bedienstand (B) angeordnet ist.

19. Kommissionierflotte nach Anspruch 18, **dadurch gekennzeichnet, dass** das Lastteil (L) mittels eines Hubmastes (23) anhebbar ist, wobei der Hubmast (23) an der Standplattform (5) des Bedienstands (B) befestigt ist.

## Claims

1. Order picker fleet, comprising at least one horizontal order picker (1a) which has a drive part (A), a load-bearing part (L) and an operator's stand (B), comprising a standing platform (5) and an operating console (6), for an operator, the standing platform (5) of which is arranged between the drive part (A) and the load-bearing part (L), wherein the load-bearing part (L) is arranged on the drive part (A) so as to be raiseable by means of a lifting device (10), and the load-bearing part (L) is provided with load-bearing rollers (13) arranged on load-bearing arms (12), and at least one vertical order picker (1b) which has a drive part (A), a load-bearing part (L) and an operator's stand (B), which comprises a standing platform (5) and an operating console (6) for an operator, the standing platform (6) of which is arranged between the drive part (A) and the load-bearing part (L), wherein the load-bearing part (L) is arranged on the operator's stand (B), and the operator's stand (B) is arranged on the drive part (A) so as to be raiseable by means of lifting equipment (20), and wherein the drive part (A) is provided with load-bearing rollers (13) arranged on the longitudinal members (2a, 2b), **characterized in that** at least one horizontal order picker (1a) of the order picker fleet and at least one vertical order picker (1b) of the order picker fleet have a drive part (A) which has a frame (2), to which, at the front in the main direction of travel (HF), a drive, in particular a travel drive unit and/or a lifting drive, is fastened, and on which a battery compartment (4) for receiving a battery block is formed behind the drive in the main direction of travel (HF), wherein the operator's stand (B) is fastened to the frame (2) directly behind the battery compartment (4) in the main direction of travel (HF) and adjacent to the battery compartment (4) in the main direction of travel (HF).

2. Order picker fleet according to Claim 1, **characterized in that** the load-bearing part (L) of the horizontal order picker (1a) or the load-bearing rollers (13) of the vertical order picker (1b) is fastened to the frame (2) of the drive part (A) adjacent to the standing platform (5) of the operator's stand (B), in the rear region of the standing platform (5) in the main direction of travel (HF).

3. Order picker fleet according to Claim 1 or 2, **characterized in that** the frame (2) of the drive part (A) has two lateral longitudinal members (2a, 2b) which extend along the operator's stand (B), wherein the operator's stand (B) and/or the load-bearing part (L) are/is fastened to the longitudinal members (2a, 2b).

4. Order picker fleet according to one of Claims 1 to 3, **characterized in that** the travel drive unit is fastened rigidly and centrally to the frame (2) of the drive part (A).

5. Order picker fleet according to one of Claims 1 to 4, **characterized in that** the drive part (A) is provided with receptacles for lateral support rollers.

6. Order picker fleet according to one of Claims 1 to 5, **characterized in that** at least two lifting drives with differing power are provided for the lifting drive arranged in the drive part (A).

7. Order picker fleet according to one of Claims 1 to 6, **characterized in that** the operator's stand (B) is provided with an operating device (8), in particular with handlebars having operating elements.

8. Order picker fleet according to one of Claims 1 to 7, **characterized in that** the operating device (8) is arranged on the operating console (6) which extends forwards in the main direction of travel (HF).

9. Order picker fleet according to one of Claims 1 to 8, **characterized in that** the operator's stand (B) of the horizontal order picker (1a) is designed as a fixed or raiseable operator's stand (B).

10. Order picker fleet according to Claim 9, **characterized in that** the raiseable operator's stand (B) of the horizontal order picker (1a) has a lifting framework (15) which is fastened to the frame (2) of the drive part (A), in particular to the longitudinal members (2a, 2b).

11. Order picker fleet according to Claim 9 or 10, **characterized in that** lateral vertical supports (7), on which the fixed operator's stand (B) of the horizontal order picker (1a) is arranged or which form the fixed section of the lifting framework (15) of the raiseable operator's stand (B) of the horizontal order picker (1a), are fastened to the frame (2) of the drive part (A), in particular to the longitudinal members (2a, 2b) .

12. Order picker fleet according to one of Claims 1 to 11, **characterized in that** the lifting device (10) for raising the load-bearing part (L) of the horizontal order picker (1a) is fastened to the frame (2) of the drive part (A), in particular to the longitudinal members (2a, 2b), behind the operator's stand (B) in the main direction of travel (HF).

13. Order picker fleet according to Claim 12, **characterized in that** the lifting device (10) for raising the load-bearing part (L) of the horizontal order picker (1a) has lateral vertical profiles (9) which are fastened to the frame (2) of the drive part (A), in particular to the longitudinal members (2a, 2b).

14. Order picker fleet according to Claim 12 or 13, **characterized in that** the lifting device (10) of the horizontal order picker (1a) is designed as initial lifting equipment and/or as a lifting mast (17).

15. Order picker fleet according to one of Claims 12 to 14, **characterized in that** a rear wall (14) of the operator's stand (B) is arranged on the lifting device (10), in particular on the lateral vertical profiles (9), of the horizontal order picker (1a).

16. Order picker fleet according to one of Claims 1 to 8, **characterized in that** the lifting equipment (20) for raising the operator's stand (B) of the vertical order picker (1b) is designed as a lifting framework (21) which is fastened to the frame (2) of the drive part (A), in particular to the longitudinal members (2a, 2b).

17. Order picker fleet according to Claim 16, **characterized in that** the lifting framework (21) of the operator's stand (B) of the vertical order picker (1b) has lateral vertical profiles (22) which are fastened to the frame (2) of the drive part (A), in particular to the longitudinal members (2a, 2b).

18. Order picker fleet according to Claim 16 or 17, **characterized in that** the load-bearing part (L) of the vertical order picker (1b) comprises a fixed or raiseable load-bearing part (L) which is arranged on the raiseable operator's stand (B).

19. Order picker fleet according to Claim 18, **characterized in that** the load-bearing part (L) is raiseable by means of a lifting mast (23), wherein the lifting mast (23) is fastened to the standing platform (5) of the operator's stand (B).

## Revendications

1. Flotte de chariots de préparation de commandes, comprenant au moins un chariot de préparation de commandes horizontal (1a) qui présente une partie d'entraînement (A), une partie de charge (L) ainsi qu'un poste de commande (B) pour un opérateur, comprenant une plate-forme de station debout (5) et un pupitre de commande (6), dont la plate-forme de station debout (5) est disposée entre la partie d'entraînement (A) et la partie de charge (L), la partie de charge (L) étant disposée de manière à pouvoir être soulevée au moyen d'un dispositif de levage (10) au niveau de la partie d'entraînement (A), et la partie de charge (L) étant pourvue de rouleaux de charge (13) disposés au niveau de bras de charge (12), et au moins un chariot de préparation de commandes vertical (1b), qui présente une partie d'entraînement(A), une partie de charge (L) ainsi qu'un poste de commande (B) pour un opérateur, comprenant une plate-forme de station debout (5) et un pupitre de commande (6), dont la plate-forme de station debout (5) est disposée entre la partie d'entraînement (A) et la partie de charge (L), la partie de charge (L) étant disposée au niveau du poste de commande (B) et le poste de commande (B) étant disposé de manière à pouvoir être soulevé au moyen d'un dispositif de levage (20) au niveau de la partie d'entraînement (A), et la partie d'entraînement (A) étant pourvue de rouleaux de charge (13) disposés au niveau de supports longitudinaux (2a, 2b), **caractérisée en ce qu'**au moins un chariot de préparation de commandes horizontal (1a) de la flotte de chariots de préparation de commandes et au moins un chariot de préparation de commandes vertical (1b) de la flotte de chariots de préparation de commandes présentent une partie d'entraînement (A), qui présente un châssis (2) sur lequel est fixé à l'avant, dans la direction de déplacement principale (HF), un entraînement, en particulier une unité d'entraînement de conduite et/ou un entraînement de levage, au niveau duquel est réalisé, dans la direction de déplacement principale (HF) derrière l'entraînement, un compartiment de batterie (4) pour recevoir un bloc batterie, le poste de commande (B) étant fixé au niveau du châssis (2) dans la direction de déplacement principale (HF) directement derrière le compartiment de batterie (4) et dans la direction de déplacement principale (HF) en position adjacente au compartiment de batterie (4).

2. Flotte de chariots de préparation de commandes selon la revendication 1, **caractérisée en ce que** la partie de charge (L) du chariot de préparation de commandes horizontal (1a) ou les rouleaux de charge (13) du chariot de préparation de commandes vertical (1b) est/sont fixé(e)(s) au niveau du châssis (2) de la partie d'entraînement (A) en position adjacente à la plate-forme de station debout (5) du poste de commande (B) dans la direction de déplacement principale (HF) dans la région arrière de la plate-forme de station debout (5).

3. Flotte de chariots de préparation de commandes selon la revendication 1 ou 2, **caractérisée en ce que** le châssis (2) de la partie d'entraînement (A) présente deux supports longitudinaux latéraux (2a, 2b) qui s'étendent le long du poste de commande (B), le poste de commande (B) et/ou la partie de charge (L) étant fixé(e)(s) au niveau des supports longitudinaux (2a, 2b).

4. Flotte de chariots de préparation de commandes selon l'une quelconque des revendications 1 à 3, **caractérisée en ce que** l'unité d'entraînement de conduite est fixée rigidement et centralement au niveau du châssis (2) de la partie d'entraînement (A).

5. Flotte de chariots de préparation de commandes selon l'une quelconque des revendications 1 à 4, **caractérisée en ce que** la partie d'entraînement (A) est pourvue de logements pour des rouleaux de support latéraux.

6. Flotte de chariots de préparation de commandes selon l'une quelconque des revendications 1 à 5, **caractérisée en ce que** pour l'entraînement de levage disposé dans la partie d'entraînement (A), au moins deux entraînements de levage de puissances différentes sont prévus.

7. Flotte de chariots de préparation de commandes selon l'une quelconque des revendications 1 à 6, **caractérisée en ce que** le poste de commande (B) est pourvu d'un dispositif de commande (8), en particulier d'un bras oscillant présentant des éléments de commande.

8. Flotte de chariots de préparation de commandes selon l'une quelconque des revendications 1 à 7, **caractérisée en ce que** le dispositif de commande (8) est disposé sur le pupitre de commande (6) qui s'étend vers l'avant dans la direction de déplacement principale (HF).

9. Flotte de chariots de préparation de commandes selon l'une quelconque des revendications 1 à 8, **caractérisée en ce que** le poste de commande (B) du chariot de préparation de commandes horizontal (1a) est réalisé sous forme de poste de commande fixe ou levable (B).

10. Flotte de chariots de préparation de commandes selon la revendication 9, **caractérisée en ce que** le poste de commande levable (B) du chariot de préparation de commandes horizontal (1a) présente une structure de levage (15) qui est fixée au niveau du châssis (2) de la partie d'entraînement (A), en particulier au niveau des supports longitudinaux (2a, 2b).

11. Flotte de chariots de préparation de commandes selon la revendication 9 ou 10, **caractérisée en ce que** des supports verticaux latéraux (7) sont fixés au niveau du châssis (2) de la partie d'entraînement (A), en particulier au niveau des supports longitudinaux (2a, 2b), au niveau desquels le poste de commande fixe (B) du chariot de préparation de commandes horizontal (1a) est disposé ou lesquels forment la portion fixe de la structure de levage (15) du poste de commande levable (B) du chariot de préparation de commandes horizontal (1a).

12. Flotte de chariots de préparation de commandes selon l'une quelconque des revendications 1 à 11, **caractérisée en ce que** le dispositif de levage (10) est fixé, pour soulever la partie de charge (L) du chariot de préparation de commandes horizontal (1a), au niveau du châssis (2) de la partie d'entraînement (A), notamment au niveau des supports longitudinaux (2a, 2b), dans la direction de déplacement principale (HF) derrière le poste de commande (B).

13. Flotte de chariots de préparation de commandes selon la revendication 12, **caractérisée en ce que** le dispositif de levage (10) présente, pour soulever la partie de charge (L) du chariot de préparation de commandes horizontal (1a), des profilés verticaux latéraux (9) qui sont fixés au niveau du châssis (2) de la partie d'entraînement (A), notamment au niveau des supports longitudinaux (2a, 2b).

14. Flotte de chariots de préparation de commandes selon la revendication 12 ou 13, **caractérisée en ce que** le dispositif de levage (10) du chariot de préparation de commandes horizontal (1a) est réalisé sous forme de dispositif de levage initial et/ou sous forme de mât de levage (17).

15. Flotte de chariots de préparation de commandes selon l'une quelconque des revendications 12 à 14, **caractérisée en ce qu'**une paroi arrière (14) du poste de commande (B) est disposée au niveau du dispositif de levage (10), notamment au niveau des profilés verticaux latéraux (9), du chariot de préparation de commandes horizontal (1a).

16. Flotte de chariots de préparation de commandes selon l'une quelconque des revendications 1 à 8, **caractérisée en ce que** le dispositif de levage (20) est réalisé, pour soulever le poste de commande (B) du chariot de préparation de commandes vertical (1b), en tant que structure de levage (21) qui est fixée au niveau du châssis (2) de la partie d'entraînement (A), notamment au niveau des supports longitudinaux (2a, 2b).

17. Flotte de chariots de préparation de commandes selon la revendication 16, **caractérisée en ce que** la structure de levage (21) du poste de commande (B) du chariot de préparation de commandes vertical (1b) présente des profilés verticaux latéraux (22) qui sont fixés au niveau du châssis (2) de la partie d'entraînement (A), en particulier au niveau des supports longitudinaux (2a, 2b).

18. Flotte de chariots de préparation de commandes selon la revendication 16 ou 17, **caractérisée en ce que** la partie de charge (L) du chariot de préparation de commandes vertical (1b) comprend une partie de charge fixe ou levable (L) qui est disposée au niveau du poste de commande levable (B).

19. Flotte de chariots de préparation de commandes selon la revendication 18, **caractérisée en ce que** la partie de charge (L) peut être soulevée au moyen d'un mât de levage (23), le mât de levage (23) étant fixé au niveau de la plate-forme de station debout (5) du poste de commande (B).
